# EUROPEAN PATENT APPLICATION

(11) **EP 4 851 847 A1**
(43) Date of publication of application: **09.12.2026**
(21) Application number: 26182754.7
(22) Date of filing: 02.06.2026
(51) Int. Cl.: G06F 40/216, G06F 40/30, G06F 40/295, G06F 40/194

(54) **SYSTEM AND METHOD FOR ALIGNING CLINICAL NOTE WITH PATIENT CONVERSATION**

(30) Priority: 06.06.2025 US 202563818977 P
(71) Applicant: Solventum Intellectual Properties Company, Eagan, MN 55121 (US)
(72) Inventor: Sadeghi, Alireza, Eagan, 55121 (US); Schaaf, Thomas, Eagan, 55121 (US); Kadkhodaie Elyaderani, Mojtaba, Eagan, 55121 (US); Zhang, Longxiang, Eagan, 55121 (US)
(74) Representative: Vossius & Partner Patentanwälte Rechtsanwälte mbB

(57) **Abstract**

A system includes a computer processor configured to receive a conversation and a clinical note associated with the conversation. The computer processor is further configured to provide the conversation and the clinical note to a trained machine learning model that includes a first encoder, a second encoder, and a similarity calculator. The computer processor is further configured to generate a plurality of first embedding representations by the first encoder, a plurality of second embedding representations by the second encoder, and a plurality of relevance scores by the similarity calculator. Each relevance score is indicative of a similarity between a respective first embedding representation and a respective second embedding representation. The computer processor is further configured to determine, for at least one second embedding representation, at least one relevant first embedding representation based on the plurality of relevance scores, and output the at least one relevant first embedding representation.

## Description

### Technical Field

The present disclosure relates to a system and a method for aligning a clinical note with a patient conversation.

### Background

Clinical conversations between patients and medical practitioners, such as doctors and nurses, are often recorded in a form of clinical notes. Trained (human) medical professionals used to generate such clinical notes. With maturity of artificial intelligence, language models are designed to help automatically generate the clinical notes based on a doctor-patient conversation (audio or transcript).

It is important for building trust in human or machine-generated clinical notes to provide a mapping (or "evidence") between the clinical note and the clinical conversation. Such a mapping may be used to highlight a clinical text (or fragment) in the clinical note when a clinical audio/transcript that supports the clinical text (or fragment) is played (or selected). Further, the mapping may allow navigation from the clinical note to the corresponding clinical audio/transcript for verification of content. This may help build confidence and allow efficient validation by a scribe/physician that the clinical text represents a correct meaning of the corresponding clinical audio/transcript. Language models may be trained to generate such mappings. However, for training, creation of a labeled dataset with mappings between the clinical text and the clinical audio/transcript for all specialties and types of medical practitioners may not be feasible because generating human annotations is time consuming and costly.

### Summary

In a first aspect, the present disclosure provides a system including at least one non-transitory computer-readable storage medium having instructions stored thereon. The system further includes at least one computer processor coupled to the at least one non-transitory computer-readable storage medium and configured to execute the instructions to receive a conversation involving one or more individuals. The conversation is related to a provision of medical care. The computer processor is further configured to receive a clinical note associated with the conversation. The computer processor is further configured to provide the conversation and the clinical note to a trained machine learning model. The trained machine learning model includes a first encoder configured to receive the conversation, a second encoder configured to receive the clinical note, and a similarity calculator. The computer processor is further configured to generate, by the first encoder, a plurality of first embedding representations. Each first embedding representation included in the plurality of first embedding representations includes at least a portion of the conversation. The computer processor is further configured to generate, by the second encoder, a plurality of second embedding representations. Each second embedding representation included in the plurality of second embedding representations includes at least a portion of the clinical note. The computer processor is further configured to provide the plurality of first embedding representations and the plurality of second embedding representations to the similarity calculator. The computer processor is further configured to generate, by the similarity calculator, a plurality of relevance scores. Each relevance score included in the plurality of relevance scores is indicative of a similarity between a respective first embedding representation included in the plurality of first embedding representations and a respective second embedding representation included in the plurality of second embedding representations. The computer processor is further configured to determine, for at least one second embedding representation, at least one relevant first embedding representation included in the plurality of first embedding representations based on the plurality of relevance scores. The computer processor is further configured to output the at least one relevant first embedding representation to at least one of a user interface, a storage device, and the at least one non-transitory computer-readable storage medium.

In a second aspect, the present disclosure provides a computer-implemented method. The method includes receiving a conversation involving one or more individuals. The conversation is related to a provision of medical care. The method further includes receiving a clinical note associated with the conversation. The method further includes providing the conversation and the clinical note to a trained machine learning model. The trained machine learning model includes a first encoder configured to receive the conversation, a second encoder configured to receive the clinical note, and a similarity calculator. The method further includes generating, by the first encoder, a plurality of first embedding representations. Each first embedding representation included in the plurality of first embedding representations includes at least a portion of the conversation. The method further includes generating, by the second encoder, a plurality of second embedding representations. Each second embedding representation included in the plurality of second embedding representations includes at least a portion of the clinical note. The method further includes providing the plurality of first embedding representations and the plurality of second embedding representations to the similarity calculator. The method further includes generating, by the similarity calculator, a plurality of relevance scores. Each relevance score included in the plurality of relevance scores is indicative of a similarity between a respective first embedding representation included in the plurality of first embedding representations and a respective second embedding representation included in the plurality of second embedding representations. The method further includes determining, for at least one second embedding representation, at least one relevant first embedding representation included in the plurality of first embedding representations based on the plurality of relevance scores. The method further includes outputting the at least one relevant first embedding representation to at least one of a user interface, a storage device, and at least one non-transitory computer-readable storage medium.

### Brief Description of Drawings

Exemplary embodiments disclosed herein may be more completely understood in consideration of the following detailed description in connection with the following figures. The figures are not necessarily drawn to scale. Like numbers used in the figures refer to like components. However, it will be understood that the use of a number to refer to a component in a given figure is not intended to limit the component in another figure labeled with the same number.
FIG. 1 is a schematic block diagram of a system, according to an embodiment of the present disclosure;
FIG. 2 is a schematic block diagram of the system, according to another embodiment of the present disclosure;
FIG. 3 is a schematic view of a user interface, according to an embodiment of the present disclosure;
FIG. 4 is a schematic block diagram of the system for training a machine learning model, according to an embodiment of the present disclosure; and
FIG. 5 is a flowchart illustrating a method, according to an embodiment of the present disclosure.

### Detailed Description

In the following description, reference is made to the accompanying figures that form a part thereof and in which various embodiments are shown by way of illustration. It is to be understood that other embodiments are contemplated and may be made without departing from the scope or spirit of the present disclosure. The following detailed description, therefore, is not to be taken in a limiting sense.

In the following disclosure, the following definitions are adopted.

As used herein, the term "patient", and its equivalents, generally refers to an individual being monitored and/or cared for within a clinical environment or who has been previously monitored and/or cared for within the clinical environment. In various examples, a patient is a human, but implementations of this disclosure are not so limited. Clinical environment may include, but are not limited to, a doctor's office, a medical facility, a medical practice, a medical lab, an urgent care facility, a medical clinic, an emergency room, an operating room, a hospital, a long term care facility, a rehabilitation facility, a nursing home, and a hospice facility.

As used herein, the term "clinical note" generally refers to medical data or a medical record generated by a provider for an individual person. The clinical note may be in a form of a text document. The clinical note may also be referred to as an electronic health record (EHR).

As used herein, the term "physician" may refer to a health care provider or a medical professional, such as a doctor, a nurse, or other appropriate clinician.

As used herein, the terms "machine learning model" or "trained machine learning model" generally refer to a computer model or a computer representation that may be tuned (e.g., trained) based on inputs to approximate unknown functions. For example, the machine learning model may include one or more of vectorization machine-learning models, sequence-to-sequence models, transformer models, a decision tree (e.g., a gradient boosted decision tree), a linear regression model, a logistic regression model, association rule learning, inductive logic programming, support vector learning, a Bayesian network, a regression-based model, a neural network, or combinations thereof. A process of building or optimizing a machine learning model is referred to herein as "training".

As used herein, the term "encoder" generally refers to a neural network or a part of a neural network that modifies information content of an input data to a more compact representation.

As used herein, the term "coupled" generally means either a direct connection between two or more elements that are connected or an indirect connection through one or more passive or active intermediary devices.

As used herein, the term "communicably coupled" generally refers to any type of connection or coupling that allows for exchange or sharing of information. The term communicably coupled may include, but is not limited to, electrically coupled (e.g., through a wire), optically coupled (e.g., through an optical cable), wirelessly coupled (e.g., through a radio frequency or other similar technologies), and/or the like. The technology by which the information is transmitted is not material to the meaning of communicably coupled.

As used herein, all numbers should be considered modified by the term "about". As used herein, "a," "an," "the," "at least one," and "one or more" are used interchangeably.

The term "about", unless otherwise specifically defined, means to a high degree of approximation (e.g., within +/- 5% for quantifiable properties) but again without requiring absolute precision or a perfect match.

As used herein as a modifier to a property or attribute, the term "generally", unless otherwise specifically defined, means that the property or attribute would be readily recognizable by a person of ordinary skill but without requiring absolute precision or a perfect match (e.g., within +/- 20 % for quantifiable properties).

As used herein, the term "configured to" and like is at least as restrictive as the term "adapted to" and requires actual design intention to perform the specified function rather than mere physical capability of performing such a function.

It is important for building trust in human or machine-generated clinical notes to provide a mapping (or "evidence") between the clinical note and a corresponding clinical conversation. Such a mapping may be used to highlight a clinical text (or fragment) in the clinical note when a clinical audio/transcript that supports the clinical text (or fragment) is played (or selected). Further, the mapping may allow navigation from the clinical note to the corresponding clinical audio/transcript for verification of content. This may help build confidence and allow efficient validation by a scribe/physician that the clinical text represents a correct meaning of the corresponding clinical audio/transcript. Language models may be trained to generate such mappings. However, for training, creation of a labeled dataset with mappings between the clinical text and the clinical audio/transcript for all specialties and types of medical practitioners may not be feasible because generating human annotations is time consuming and costly.

The present disclosure provides a system that includes at least one non-transitory computer-readable storage medium having instructions stored thereon. The system further includes at least one computer processor coupled to the at least one non-transitory computer-readable storage medium and configured to execute the instructions to receive a conversation involving one or more individuals. The conversation is related to a provision of medical care. The computer processor is further configured to receive a clinical note associated with the conversation. The computer processor is further configured to provide the conversation and the clinical note to a trained machine learning model. The trained machine learning model includes a first encoder configured to receive the conversation, a second encoder configured to receive the clinical note, and a similarity calculator. The computer processor is further configured to generate, by the first encoder, a plurality of first embedding representations. Each first embedding representation included in the plurality of first embedding representations includes at least a portion of the conversation. The computer processor is further configured to generate, by the second encoder, a plurality of second embedding representations. Each second embedding representation included in the plurality of second embedding representations includes at least a portion of the clinical note. The computer processor is further configured to provide the plurality of first embedding representations and the plurality of second embedding representations to the similarity calculator. The computer processor is further configured to generate, by the similarity calculator, a plurality of relevance scores. Each relevance score included in the plurality of relevance scores is indicative of a similarity between a respective first embedding representation included in the plurality of first embedding representations and a respective second embedding representation included in the plurality of second embedding representations. The computer processor is further configured to determine, for at least one second embedding representation, at least one relevant first embedding representation included in the plurality of first embedding representations based on the plurality of relevance scores. The computer processor is further configured to output the at least one relevant first embedding representation to at least one of a user interface, a storage device, and the at least one non-transitory computer-readable storage medium.

The system of the present disclosure allows the trained machine learning model to generate the plurality of relevance scores. Each relevance score is indicative of the similarity between the respective first embedding representation (i.e., a portion of the conversation) and the respective second embedding representation (i.e., a portion of the clinical note). Thus, the system may allow mapping (or evidence identification) between portions of the clinical note and portions of the conversation. Further, the system may determine the at least one relevant first embedding representation (i.e., a portion of the conversation) for the at least one second embedding representation (i.e., a portion of the clinical note) based on the plurality of relevance scores. The at least one relevant first embedding representation may be determined based on the respective relevance scores of the plurality of first embedding representations (i.e., portions of the conversation). This may allow a user to verify that the portion of the clinical note represents the correct meaning of the corresponding portion of the conversation based on the at least one relevant first embedding representation of the at least one second embedding representation. Additionally, the verification may be performed efficiently.

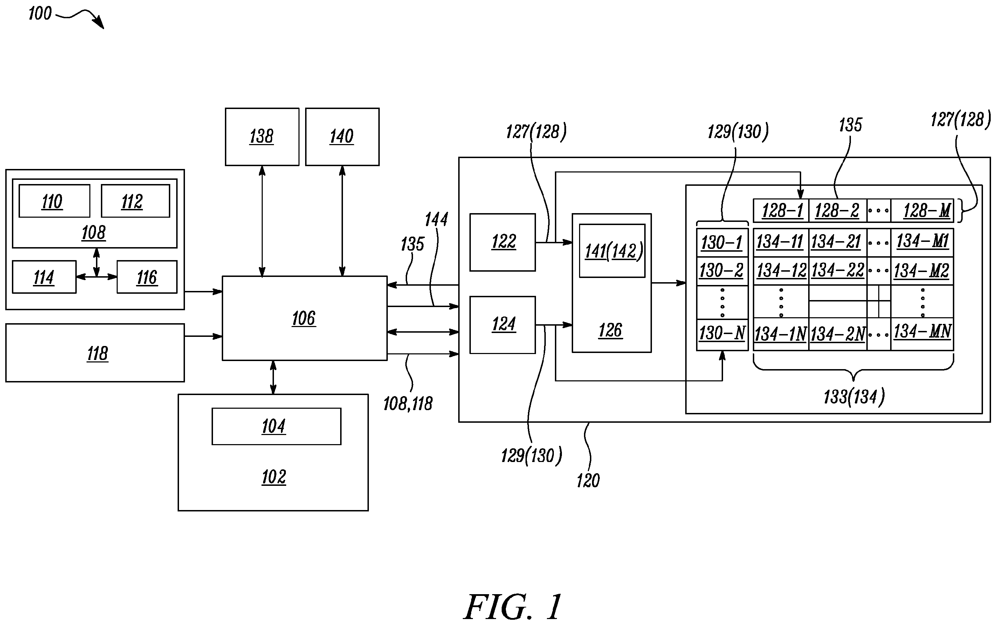

FIG. 1 is a schematic block diagram of a system 100. In some embodiments, the system 100 may be used for identification of evidence for a portion of a clinical note 118 in a conversation 108 between one or more individuals (e.g., between a patient 114 and one or more other individuals 116). The conversation 108 is related to a provision of medical care. In some embodiments, the clinical note 118 is generated automatically or otherwise based on the conversation 108 between the one or more individuals, i.e., between the patient 114 and the one or more other individuals 116. For example, the clinical note 118 may be generated using natural language understanding models.

The system 100 includes at least one non-transitory computer-readable storage medium 102 having instructions 104 stored thereon. The system 100 further includes at least one computer processor 106 coupled to the at least one non-transitory computer-readable storage medium 102. The term "at least one non-transitory computer-readable storage medium 102" is interchangeably referred to herein as "the storage medium 102". The term "at least one computer processor 106" is interchangeably referred to herein as "the computer processor 106".

In some embodiments, the storage medium 102 may include any type of computer readable storage media, including, but not be limited to, various types of volatile and non-volatile storage media, including, but not limited to, random access memory, read-only memory, programmable read-only memory, electrically programmable read-only memory, electrically erasable read-only memory, flash memory, magnetic tape or disk, optical media, and the like. In some cases, the storage medium 102 may include a cache or a random-access memory for the computer processor 106. Alternatively, or in addition, the storage medium 102 may be separate from the computer processor 106, such as a cache memory, a system memory, or other memory. In some embodiments, the storage medium 102 may be an external storage device or a database for storing data. Examples may include a hard drive, compact disc ("CD"), digital video disc ("DVD"), memory card, memory stick, floppy disc, universal serial bus ("USB") memory device, or any other device operative to store data.

In some embodiments, the computer processor 106 may be embodied in a number of different ways. For example, the computer processor 106 may be embodied as various processing means, such as one or more of a microprocessor or other processing elements, a coprocessor, or various other computing or processing devices, including integrated circuits, such as, e.g., an ASIC (application specific integrated circuit), an FPGA (field programmable gate array), or the like.

As such, whether configured by hardware or by a combination of hardware and software, the computer processor 106 may represent an entity (e.g., physically embodied in circuitry - in the form of processing circuitry) capable of performing operations according to some embodiments while configured accordingly. Thus, for example, when the computer processor 106 is embodied as an executor of software instructions, the instructions may specifically configure the computer processor 106 to perform the operations described herein. Alternatively, as another example, when the computer processor 106 is embodied as an ASIC, FPGA, or the like, the computer processor 106 may have specifically configured hardware for conducting the operations described herein.

In some embodiments, the system 100 may be implemented as a server-side application, a client-side application, or a hybrid server-side/client-side application, and may be connected to a network (e.g., the Internet or a local area network). In some embodiments, the system 100 may include various components, examples of which may include, but are not limited to, a personal computer, a server computer, a series of server computers, a mini computer, a mainframe computer, one or more Network Attached Storage (NAS) systems, one or more Storage Area Network (SAN) systems, one or more Platform as a Service (PaaS) systems, one or more Infrastructure as a Service (IaaS) systems, one or more Software as a Service (SaaS) systems, a cloud-based computational system, and a cloud-based storage platform. In some embodiments, the system 100 may be implemented in a local facility within a clinical environment, such as in a general purpose computer, or a set of computers on a local area network.

In some embodiments, the computer processor 106 may be communicatively coupled to the storage medium 102 by way of one or more wired and/or wireless communication interfaces. In some examples, the wireless communication interface may communicate data via one or more wireless communication protocols, such as Bluetooth^{®}, infrared, Wi-Fi, Zigbee, wireless universal serial bus (USB), radio frequency, near-field communication (NFC), RFID protocols, IEEE 802.11a, 802.11b, 802.11g, 802.11n, or generally any wireless communication protocol.

The computer processor 106 is configured to execute the instructions 104 to receive the conversation 108 between the one or more individuals, i.e., between the patient 114 and the one or more other individuals 116. In some embodiments, the conversation 108 includes at least one of a dictation, an instruction, and a dialog related to the provision of medical care. In some embodiments, the conversation 108 is in a form of a transcript 110 or an audio 112. In some embodiments, the one or more other individuals 116 may refer to a health care provider or a medical professional, such as a doctor, a nurse, or other appropriate clinician.

In some embodiments, the transcript 110 may be either a manual transcript generated by human experts, such as, doctors, medical scribes, etc., or generated by an automatic speech recognition (ASR) system (not shown). In the latter case, recorded dialogues from the conversation 108 may be collected using an audio input device (not shown), such as a microphone, and sent to the ASR system for generation of the transcript 110.

In some embodiments, the audio input device may be a handheld microphone, a lapel microphone, an embedded microphone, such as those embedded within eyeglasses, smart phones, tablet computers and/or watches, or an audio recording device. In some embodiments, the audio input device may include a plurality of discrete audio devices disposed within the clinical environment for capturing the conversation 108. In some embodiments, the transcript 110 is in a textual format. In some embodiments, the transcript 110 may represent a textual conversation between the patient 114 and the one or more other individuals 116, such as a typed conversation (or chat). Alternatively, the conversation 108 may be in the form of the audio 112, i.e., an audio/video recording of the conversation 108.

The computer processor 106 is further configured to receive the clinical note 118 associated with the conversation 108. In some embodiments, the clinical note 118 may be obtained based on the conversation 108 between the one or more individuals, i.e., between the patient 114 and the one or more other individuals 116. For example, the clinical note 118 may be obtained after processing information obtained from the conversation 108. In some embodiments, the clinical note 118 may be obtained by correcting or updating an intermediate clinical note or the transcript 110 of the conversation 108. In some embodiments, the clinical note 118 may be generated automatically via machine learning models. Alternatively, the clinical note 118 may be manually recorded by the one or more other individuals 116.

The computer processor 106 is further configured to provide the conversation 108 and the clinical note 118 to a trained machine learning model 120. The trained machine learning model 120 includes a first encoder 122 configured to receive the conversation 108, a second encoder 124 configured to receive the clinical note 118, and a similarity calculator 126.

The computer processor 106 is further configured to generate, by the first encoder 122, a plurality of first embedding representations 127. The plurality of first embedding representations 127 includes multiple first embedding representations 128-1, 128-2, ..., 128-M (collectively, first embedding representations 128), where M is a positive integer corresponding to a total number of the first embedding representations 128 included in the plurality of first embedding representations 127. Each first embedding representation 128 included in the plurality of first embedding representations 127 includes at least a portion of the conversation 108. In other words, each first embedding representation 128 may represent a fragment of the conversation 108. In some embodiments, the fragment may be created at varying levels of granularity, such as, concept-level, phrase-level, sentence-level, etc.

The computer processor 106 is further configured to generate, by the second encoder 124, a plurality of second embedding representations 129. The plurality of second embedding representations 129 includes multiple second embedding representations 130-1, 130-2, ..., 130-N (collectively, second embedding representations 130), where N is a positive integer corresponding to a total number of the second embedding representations 130 included in the plurality of second embedding representations 129. Each second embedding representation 130 included in the plurality of second embedding representations 129 includes at least a portion of the clinical note 118. For example, each second embedding representation 130 may represent a fragment of the clinical note 118. In some embodiments, each second embedding representation 130 includes at least one of a concept, a phrase, and a sentence included in the clinical note 118.

The computer processor 106 is further configured to provide the plurality of first embedding representations 127 and the plurality of second embedding representations 129 to the similarity calculator 126. The computer processor 106 is further configured to generate, by the similarity calculator 126, a plurality of relevance scores 133 (or a plurality of confidence scores). The plurality of relevance scores 133 includes multiple relevance scores 134-11, 134-12, ..., 134-MN (collectively, relevance scores 134).

Each relevance score 134 (or confidence score) included in the plurality of relevance scores 133 is indicative of a similarity between a respective first embedding representation 128 included in the plurality of first embedding representations 127 and a respective second embedding representation 130 included in the plurality of second embedding representations 129. For example, the relevance score 134-11 is indicative of the similarity between the first embedding representation 128-1 and the second embedding representation 130-1, the relevance score 134-12 is indicative of the similarity between the first embedding representation 128-1 and the second embedding representation 130-2, the relevance score 134-21 is indicative of the similarity between the first embedding representation 128-2 and the second embedding representation 130-1, and so on.

In some embodiments, the similarity calculator 126 may determine the similarity between the respective first embedding representation 128 and the respective second embedding representation 130 using a statistical language model, e.g., N-gram, generative pre-trained transformers (GPT), or similar. Alternatively, other suitable models, such as rule-based models, machine-learned regressor models, machine-learned classifier models, or the like may also be used.

The computer processor 106 is further configured to determine, for at least one second embedding representation 130, at least one relevant first embedding representation 135 included in the plurality first embedding representations 128 based on the plurality of relevance scores 133. In some embodiments, for the at least one second embedding representation 130, the computer processor 106 may determine the at least one relevant first embedding representation 135 based on the first embedding representation 128 having the highest relevance score 134. For example, for the second embedding representation 130-1, if the first embedding representation 128-2 has the highest relevance score 134-21, then the first embedding representation 128-2 may be chosen as the at least one relevant first embedding representation 135.

In some embodiments, the trained machine learning model 120 may be designed such that the trained machine learning model 120 can filter out the plurality of first embedding representations 127 using an external, an internal, or a hybrid rule-based, model-based, human-based, or information theoretic-based metric along with the respective relevance scores 134 for determining the at least one relevant first embedding representation 135. In cases where the relevance score 134 corresponding to the first embedding representation 128 do not satisfy a certain criterion, the trained machine learning model 120 may choose not to select the first embedding representation 128 as the at least one relevant first embedding representation 135 associated with the at least one second embedding representation 130 since the trained machine learning model 120 may not find sufficient confidence to support the first embedding representation 128.

In some embodiments, in case the conversation 108 (or the transcript 110 or the audio 112) and/or the clinical note 118 is long, the trained machine learning model 120 may utilize a range of approaches. For example, the trained machine learning model 120 may divide the conversation 108 and/or the clinical note 118 into smaller chunks or segments to process them separately in a more efficient manner.

In another example, the trained machine learning model 120 may filter out irrelevant parts of the conversation 108 and may keep only those parts that seem to be important, e.g., the most important information may be included at the beginning of the conversation 108 when the patient 114 describes their medical complaints or near the end of the conversation 108 when assessment and treatment plan is communicated to the patient 114. The trained machine learning model 120 may selectively focus on the most relevant parts of the conversation 108 using, e.g., soft or hard-attention mechanisms. In some embodiments, the trained machine learning model 120 may also adopt a hierarchical approach to divide the conversation 108 into hierarchical levels of representation, such as, words, concepts, phrases, sentences, paragraphs, and sections.

In some embodiments, the computer processor 106 is further configured to introduce one or more biases 144 into the trained machine learning model 120 based at least in part on aspects of the conversation 108 and aspects of the clinical note 118 to further improve flexibility during inference, i.e., for determining the plurality of relevance scores 133. For example, the trained machine learning model 120 may process the determined relevance scores 134 to adaptively focus on different sections of the conversation 108 (i.e., the transcript 110 or the audio 112) and at different granularities (e.g., words, concepts, phrases, sentences, paragraphs, sections, etc.). Exogenous and indigenous information may be incorporated into the trained machine learning model 120 to inject a wide range of prior information into this processing step. Such prior information may be obtained from human-experts, external knowledge sources, or novel data-driven methods.

In some embodiments, the trained machine learning model 120 may further employ a knowledge-enhanced reasoning scheme to improve determination of the plurality of relevance scores 133. Specifically, a knowledge-graph may be generated to encapsulate relationships between entities in the clinical note 118, the conversation 108 (the transcript 110 or the audio 112), and between them. Such entities may include, e.g., the patient 114, the one or more other individuals 116 (e.g., a doctor, a care giver, etc.), reasons for visit, medications, history of physical illness, chit-chat, assessment and planning, images, test results, events, places, etc. This structured representation of knowledge may help to uncover hidden relationships, discover new patterns, and enable complex analysis between the clinical note 118 and the conversation 108 (i.e., the transcript 110 or the audio 112). Augmenting the trained machine learning model 120 with the knowledge-enhanced reasoning may improve its accuracy and provide better explanations for its evidence findings.

The computer processor 106 is further configured to output the at least one relevant first embedding representation 135 to at least one of a user interface 138, a storage device 140, and the storage medium 102. This may allow the at least one relevant first embedding representation 135 to be reviewed and verified against the at least one second embedding representation 130. In some embodiments, the user interface 138 may be accessible to the one or more individuals 116 (or other users of the system 100) for verification and feedback. The storage medium 102 or the storage device 140 may store the at least one relevant first embedding representation 135 against the at least one second embedding representation 130 for future reference. In some embodiments, the storage device 140 may be an internal or an external memory of the system 100.

In some embodiments, the computer processor 106 is further configured to visually highlight the at least one relevant first embedding representation 135 in the conversation 108 linked to the at least one second embedding representation 130 (i.e., a portion of the clinical note 118). In one example, when a user of the system 100 hovers a pointer or a cursor over the portion of the clinical note 118 in the user interface 138, the corresponding at least one relevant first embedding representation 135 may get highlighted in the transcript 110 (or the audio 112) of the conversation 108, e.g., via a pop up. In another example, the computer processor 106 may color code the at least one relevant first embedding representation 135 in the transcript 110 in a same color as that of the at least one second embedding representation 130 of the clinical note 118.

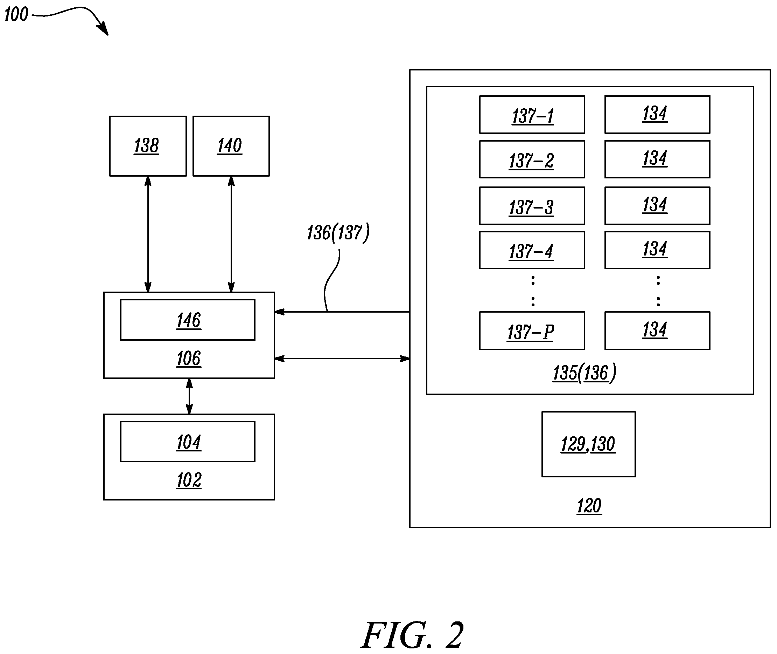

FIG. 2 is a schematic block diagram of the system 100, according to another embodiment of the present disclosure. Some components of the system 100 are not shown in FIG. 2 for illustrative and descriptive purposes. In some embodiments, for the at least one second embedding representation 130, the at least one relevant first embedding representation 135 includes a plurality of relevant first embedding representations 136. The plurality of relevant first embedding representations 136 includes multiple relevant first embedding representations 137-1, 137-2, ..., 137-P (collectively, relevant first embedding representations 137), where P is a positive integer corresponding to a total number of the relevant first embedding representations 137 included in the plurality of relevant first embedding representations 136. For example, the trained machine learning model 120 may report top relevant first embedding representations 137 corresponding to the at least one second embedding representation 130.

In some embodiments, the trained machine learning model 120 may post-process the relevant first embedding representations 137 to provide additional information that complements the reported relevant first embedding representations 137. In some embodiments, the post-processing may include a (multi-level) filtering step designed to increase a performance of the trained machine learning model 120.

In some embodiments, the computer processor 106 is further configured to rank the plurality of relevant first embedding requirements 136 based on the respective relevance scores 134. In some embodiments, the computer processor 106 is further configured to output the plurality of relevant first embedding representations 136 to at least of the user interface 138, the storage device 140, and the storage medium 102 for which the respective relevance scores 134 are above a threshold relevance score 146. For example, the computer processor 106 may select only those relevant first embedding representations 137 from the plurality of relevant first embedding representations 136 where the respective relevance scores 134 are above the threshold relevance score 146.

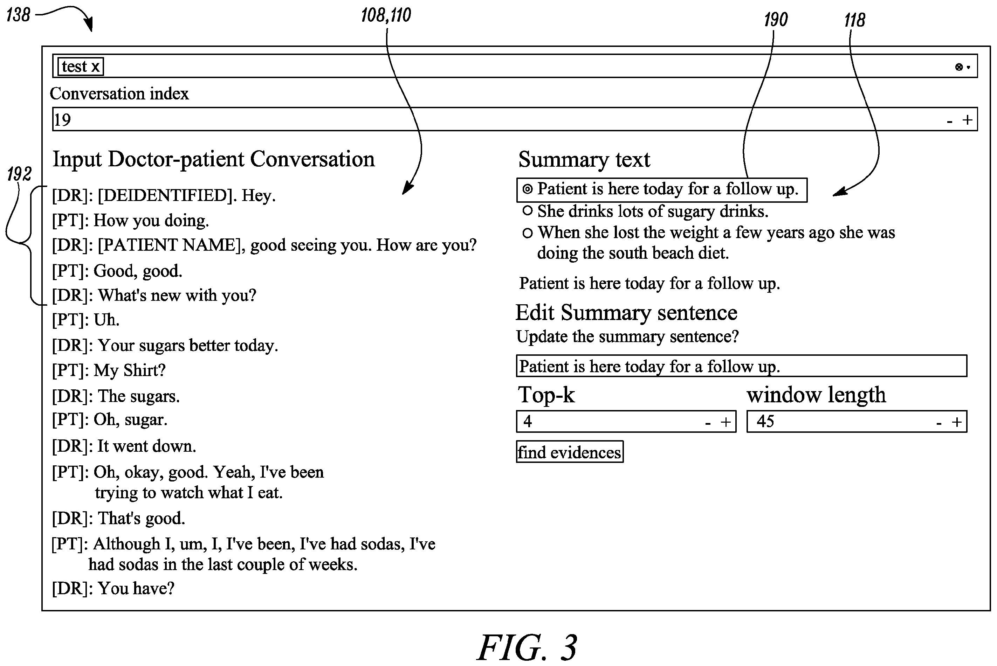

FIG. 3 is a schematic view of the user interface 138 illustrating a portion of the transcript 110 of the conversation 108 on a left side of the user interface 138 and multiple portions of the associated clinical note 118 (i.e., summary sentences) on a right side of the user interface 138, e.g., a history of present illness (HPI) summary section of an electronic health record (EHR).

In some embodiments, one or more portions of the clinical note 118 may be selected to highlight the respective portion in the transcript 110 of the conversation 108 that represents its evidence. For example, upon selecting the portion 190 of the clinical note 118, the respective portion 192 in the transcript 110 of the conversation 108 may be highlighted as its evidence. In some cases, multiple portions in the transcript 110 of the conversation 108 may be highlighted.

In some embodiments, the user interface 138 may highlight the evidence for ease of demonstration, e.g., by changing a font, a font size, a font color of the evidence, or by adding elements such as pointers, or underline, etc. to the evidence in the conversation 108. In some embodiments, the evidence may also be presented in a separate section. This may allow a user to easily follow the transcript 110 and find the evidences for the selected portion of the clinical note 118. In some embodiments, the user interface 138 may allow the user to edit the portion of the clinical note 118 to represent a correct summary of the respective portion of the conversation 108.

In some embodiments, the user may select and modify any text fragment in the clinical note 118, specify how many evidences are expected (i.e., a number of top-k evidences) for that fragment, and how lengthy the evidence may look like (i.e., a window length). For example, the trained machine learning model 120 (shown in FIGS. 1 and 2) may return the top evidences for the selected fragment of clinical note 118, sorts them according to their relevance scores (e.g., the relevance scores 134 shown in FIGS. 1 and 2), and may further filter or post-process the evidences if needed.

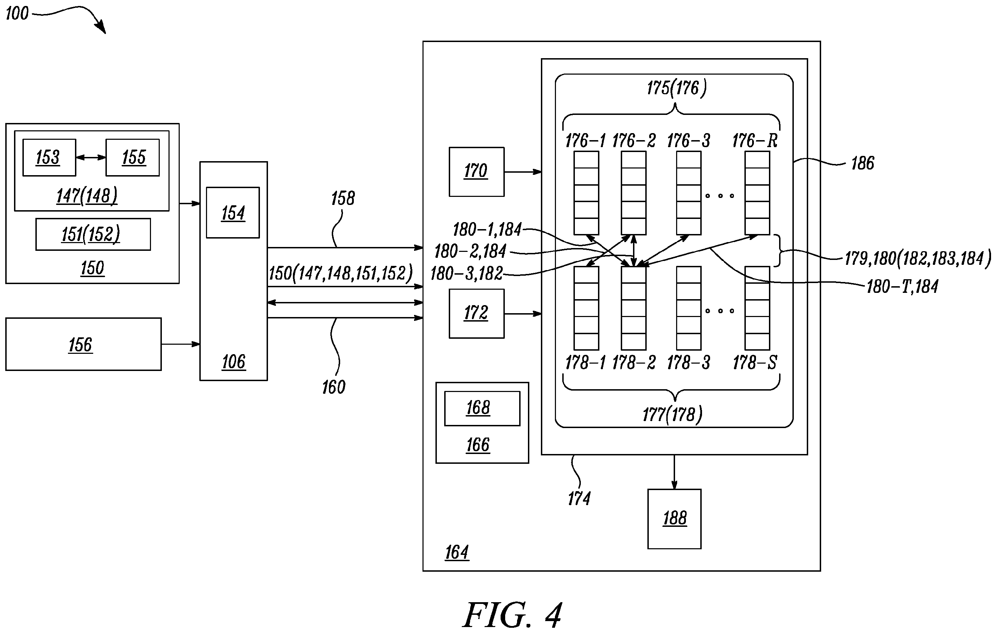

FIG. 4 is a schematic block diagram of the system 100 for training a machine learning model 164. In some embodiments, the machine learning model 164 may be trained to generate the trained machine learning model 120 shown in FIGS. 1 and 2.

In some embodiments, the computer processor 106 is further configured to train the machine learning model 164 using a training data 150. The training data 150 includes a plurality of training conversations 147 and a corresponding plurality of training clinical notes 151. The plurality of training conversations 147 includes multiple training conversations 148 and the plurality of training clinical notes 151 includes multiple training clinical notes 152. Each training conversation 148 included in the plurality of training conversations 147 is representative of at least a portion of a conversation involving one or more individuals (e.g., between a patient 153 and one or more other individuals 155). Further, each training conversation 148 is associated with a respective training clinical note 152.

In some embodiments, the machine learning model 164 includes a first trainable encoder 170, a second trainable encoder 172, and a trainable similarity calculator 174. The computer processor 106 is further configured to provide the plurality of training conversations 147 to the first trainable encoder 170. The computer processor 106 is further configured to generate, by the first trainable encoder 170, a plurality of first training vectors 175. In some embodiments, the plurality of first training vectors 175 include multiple first training vectors 176-1, 176-2, ..., 176-R (collectively, first training vectors 176), where R is a positive integer corresponding to a total number of the first training vectors 176 included in the plurality of first training vectors 175. Each first training vector 176 is representative of a respective training conversation 148 included in the plurality of training conversations 147. In some embodiments, each first training vector 176 may represent a portion of the respective training conversation 148 or the entire training conversation 148.

The computer processor 106 is further configured to provide the plurality of training clinical notes 151 to the second trainable encoder 172. The computer processor 106 is further configured to generate, by the second trainable encoder 172, a plurality of second training vectors 177. In some embodiments, the plurality of second training vectors 177 include multiple second training vectors 178-1, 178-2, ..., 178-S (collectively, second training vectors 178), where S is a positive integer corresponding to a total number of the second training vectors 178 included in the plurality of second training vectors 177. Each second training vector 178 is representative of a respective training clinical note 152. In some embodiments, each second training vector 178 may represent a portion of the respective training clinical note 152 or the entire training clinical note 152. Further, since each training conversation 148 is associated with a respective training clinical note 152, the first training vector 176-1 is associated with the second training vector 178-1, the first training vector 176-2 is associated with the second training vector 178-2, and so on.

In some embodiments, the first trainable encoder 170 and the second trainable encoder 172 may transform the training conversation 148 and the training clinical note 152, respectively, into a shared embeddings space where related content has a similar representation. Based on this, the machine learning model 164 may learn content-dependent embeddings (also known as contextualized representations).

The computer processor 106 is further configured to provide the plurality of first training vectors 175 and the plurality of second training vectors 177 to the trainable similarity calculator 174. The computer processor 106 is further configured to generate, by the trainable similarity calculator 174, a similarity matrix 186 including a plurality of associations 179. In some embodiments, the plurality of associations 179 include multiple associations 180-1, 180-2, 180-3, ..., 180-T (collectively, associations 180), where T is a positive integer corresponding to a total number of the associations 180 included in the plurality of associations 179.

Each association 180 included in the plurality of associations 179 is between a respective first training vector 176 included in the plurality of first training vectors 175 and a respective second training vector 178 included in the plurality of second training vectors 177. For example, the trainable similarity calculator 174 may rely on learned embeddings and their similarities (or correlations) to find a mapping between the first training vector 176 (i.e., the training conversation 148) and the second training vector 178 (i.e., the training clinical note 152).

Each association 180 can be one of a positive association 182 and a negative association 184 (based on prior knowledge). The positive association 182 is indicative of pairing of a respective training conversation 148 with a respective training clinical note 152 that resulted from the training conversation 148, and the negative association 184 is indicative of pairing of a respective training conversation 148 with a respective training clinical 152 that resulted from a different training conversation 148. For example, the association 180-1 between the first training vector 176-1 and the second training vector 178-2 is the negative association 184, the association 180-2 between the first training vector 176-2 and the second training vector 178-1 is the negative association 184, while the association 180-3 between the first training vector 176-2 and the second training vector 178-2 is the positive association 182.

In some embodiments, for each second training vector 178, the plurality of associations 179 includes at least one positive association 182 and a plurality of negative associations 183. In some embodiments, the plurality of negative associations 183 includes multiple negative associations 184. For example, for the second training vector 178-2, the association 180-1 and the association 180-T are the negative associations 184 while the association 180-3 is the positive association 182.

In some embodiments, the shared embedding space between the training conversations 148 and the training clinical notes 152 may be optimized during training such that the embeddings of the paired training clinical notes 152 (i.e., the second training vectors 178) and their associated training conversations 148 (i.e., the first training vectors 176) are as close as possible to each other. In other words, the positive associations 182 between the embeddings of the paired training clinical notes 152 and their associated training conversations 148 should be as close as possible to each other in the shared embedding space.

In the meanwhile, the embeddings of the randomly paired training clinical notes 152 (i.e., the second training vectors 178) and the training conversations 148 (i.e., the first training vectors 176) should be separated from each other in the shared embedding space. In other words, the negative associations 184 between the embeddings of the randomly paired training clinical notes 152 and the training conversations 148 should be separated from each other in the shared embedding space.

In some embodiments, the computer processor 106 is further configured to generate, by the trainable similarity calculator 174, a relevancy score 188 corresponding to each association 180 included in the plurality of associations 179. The relevancy score 188 represents a score determined by the trainable similarity calculator 174 based on the similarity between embeddings of the training conversations 148 (i.e., the first training vectors 176) and the training clinical notes 152 (i.e., the second training vectors 178). The trainable similarity calculator 174 yields high similarity score if the training clinical note 152 (i.e., the second training vectors 178) and the training conversation 148 (i.e., the first training vectors 176) are aligned or paired, i.e., the positive association 182, and low scores if the training clinical note 152 (i.e., the second training vectors 178) and the training conversation 148 (i.e., the first training vectors 176) are randomly paired, i.e., the negative association 184.

The similarity between any paired training clinical conversation 148 and its associated training clinical note 152 acts as a positive signal to train the machine learning model 164. This signal enforces the learned representations of the paired training conversations 148 and the training clinical notes 152 to be close to each other in the shared representation space. The similarity between randomly paired training clinical notes 152 and the training conversations 148 acts as a negative signal to train the machine learning model 164. This signal enforces the machine learning model 164 to push away the learned representations of not paired training conversations 148 and the training clinical notes 152 from each other in the shared representation space.

The computer processor 106 is further configured to compute a contrastive loss 154 based at least in part on the similarity matrix 186. In some embodiments, the contrastive loss 154 promotes similarity between the paired training clinical notes 152 (i.e., the second training vectors 178) and their associated training conversations 148 (i.e., the first training vectors 176), i.e., positive associations 182, while encouraging dissimilarity between the randomly paired training clinical notes 152 (i.e., the second training vectors 178) and the training conversations 148 (i.e., the first training vectors 176).

The computer processor 106 is configured to modify the machine learning model 164 by modifying one or more weights 168 in one or more layers 166 of the machine learning model 164. Upon training the machine learning model 164 using the relevancy score 188 and the contrastive loss 154, the machine learning model 164 has learned to make the embeddings of clinical conversations (transcripts or audios) and their associated clinical notes closer to each other in an optimized shared embedding space and separate such embeddings if the clinical conversations and the clinical notes are randomly paired.

In some embodiments, the computer processor 106 is further configured to introduce one or more training biases 158 into the machine learning model 164 based at least in part on aspects of the plurality of training conversations 147 and aspects of the plurality of training clinical notes 151. In some embodiments, the one or more training biases 158 provide domain knowledge that causes the machine learning model 164 to more accurately predict a plurality of relevance scores (e.g., the plurality of relevance scores 133 shown in FIG. 1). For example, during training, the contrastive loss 154 may be augmented with extra regularization terms that emphasize importance of different fragments (sections, concepts, or phrases) of the training conversations 148 and the training clinical notes 152. Adding such regularization terms may enable adding the one or more training biases 158 to the machine learning model 164 and may guide its learning and future inference performance. This may enable injecting prior knowledge into the machine learning model 164.

The computer processor 106 is further configured to introduce one or more other training biases 160 into the machine learning model 164 from one or more other pre-trained models 156. For example, during training of the machine learning model 164, model parameters/architecture of the machine learning model 164 may be instantiated with those of the one or more other pre-trained models 156 that are pre-trained on similar tasks or domains. Through this, the one or more other training biases 160 may be added to the machine learning model 164 to allow the machine learning model 164 to adapt to a specific domain.

Thus, the system 100 may utilize an unsupervised approach for training the machine learning model 164 that mitigates or eliminates an amount of labeled data needed for training the machine learning model 164. Human generated labels may be primarily needed to assess a performance of the unsupervised approach. In some embodiments, a large amount of unsupervised aligned data (or the training data 150), i.e., paired training clinical notes 152 and the training conversations 148 may be used to pre-train a general model which may then be finetuned based on a subset of the unsupervised data (e.g., medical specialty or hospital specific data) or with a reduced amount of the labeled data.

Most existing works on alignment problem (evidence mapping between doctor patient conversations and associated clinical notes) are either supervised learning-based approaches, which need annotated datasets, or typically are developed for domains other than text-to-text or text-to-audio alignment problems. For example, most of the work in this domain is in modalities other than text-to-text mapping, such as image-to-text mapping, which typically require non-trivial data collection and cleaning steps.

The system 100 for training the machine learning model 164 according to the present disclosure may not rely on human annotations to learn to extract evidence from doctor patient conversations for each phrase in clinical notes. Similar supervised alignment approaches typically require heavy work on data gathering, sampling, and human annotation, and hence, are difficult to scale. The present approach is agnostic to the way clinical notes are being created from clinical doctor-patient conversations. The first trainable encoder 170 and the second trainable encoder 172 are specifically finetuned for a text summarization task and then later different parts are used for the alignment problem.

In some embodiments, the machine learning model 164 (i.e., an unsupervised alignment model) may be used to generate synthetic alignment annotations for future training of supervised alignment models. For example, high quality alignment mappings may be created from clinical notes to doctor-patient conversations by using the machine learning model 164 (a well-trained unsupervised model) and training data. The obtained dataset may later be used for improving the performance of the supervised alignment models. This may avoid or reduce a need to collect human alignment annotations that are costly/time-consuming.

In some embodiments, the unsupervised solution according to the present disclosure may be converted into a semi-supervised training approach to further improve an alignment performance of the machine learning model 164 using human supervision. For example, in cases where annotated data is available, the trainable similarity calculator 174 that determines the contrastive loss 154 may be modified to incorporate label information to improve the performance of the machine learning model 164. The contrastive loss 154 may be augmented with proper regularization terms and cost functions to take advantage of both labeled and unlabeled data simultaneously, i.e., (a semi-supervised learning paradigm), or sequentially (e.g., by first using unsupervised learning approaches on unlabeled samples and then finetuning using supervised training approaches on labeled samples, or vice versa).

Human feedback may provide further informative signal to enhance the performance of the machine learning model 164, helping the machine learning model 164 to adapt to new, challenging, or unexpected scenarios (reinforcement learning). Combining multiple forms of learning may provide a more robust and accurate machine learning model 164, which may be able to handle a variety of real-world scenarios in an improved manner. By utilizing a variety of learning techniques, the machine learning model 164 may become more versatile and adaptable, and ultimately provide more accurate predictions.

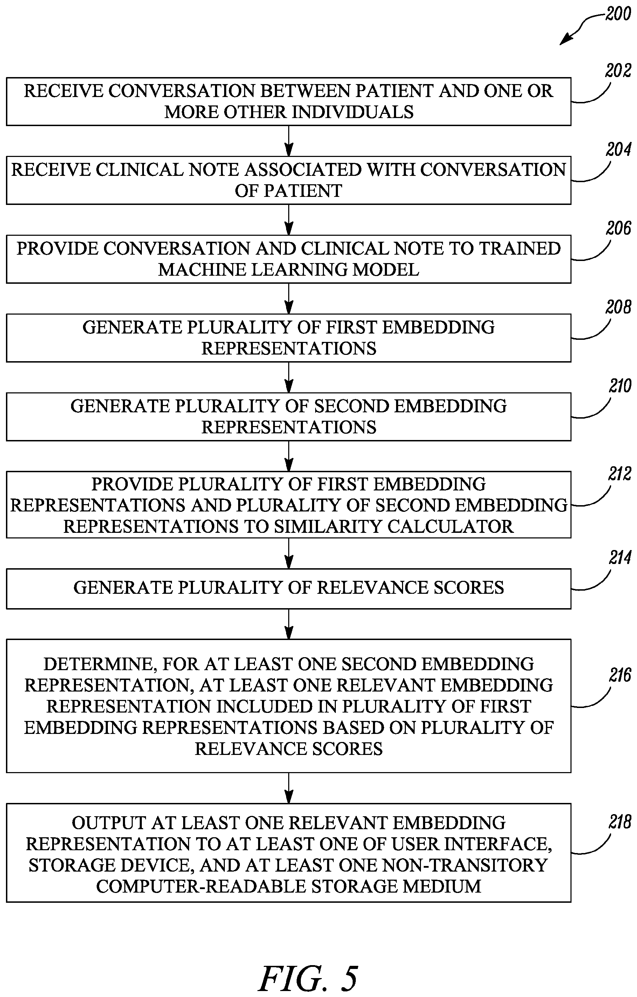

FIG. 5 is a flowchart illustrating a computer-implemented method 200. The method 200 may be implemented using the system 100 of FIGS. 1, 2 and 4. Referring now to FIGS. 1, 2, 4 and 5, at step 202, the method 200 includes receiving the conversation 108 between the one or more individuals (e.g., between the patient 114 and the one or more other individual 116). The conversation is related to a provision of medical care. In some embodiments, the conversation 108 includes at least one of a dictation, an instruction, and a dialog related to the provision of medical care. In some embodiments, the conversation 108 is in the form of the transcript 110 or the audio 112.

At step 204, the method 200 further includes receiving the clinical note 118 associated with the conversation 108.

At step 206, the method 200 further includes providing the conversation 108 and the clinical note 118 to the trained machine learning model 120. The trained machine learning model 120 includes the first encoder 122 configured to receive the conversation 108, the second encoder 124 configured to receive the clinical note 118, and the similarity calculator 126.

At step 208, the method 200 further includes generating, by the first encoder 122, the plurality of first embedding representations 127. Each first embedding representation 128 included in the plurality of first embedding representations 127 includes at least a portion of the conversation 108.

At step 210, the method 200 further includes generating, by the second encoder 124, the plurality of second embedding representations 129. Each second embedding representation 130 included in the plurality of second embedding representations 129 includes at least a portion of the clinical note 118. In some embodiments, each second embedding representation 130 includes at least one of a concept, a phrase, and a sentence included in the clinical note 118.

At step 212, the method 200 further includes providing the plurality of first embedding representations 127 and the plurality of second embedding representations 129 to the similarity calculator 126.

At step 214, the method 200 further includes generating, by the similarity calculator 126, the plurality of relevance scores 133. Each relevance score 134 included in the plurality of relevance scores 133 is indicative of a similarity between the respective first embedding representation 128 included in the plurality of first embedding representations 127 and the respective second embedding representation 130 included in the plurality of second embedding representations 129.

At step 216, the method 200 further includes determining, for the at least one second embedding representation 130, the at least one relevant first embedding representation 135 included in the plurality of first embedding representations 127 based on the plurality of relevance scores 133.

At step 218, the method 200 further includes outputting the at least one relevant first embedding representation 135 to at least one of the user interface 138, the storage device 140, and the storage medium 102.

In some embodiments, for the at least one second embedding representation 130, the at least one relevant first embedding representation 135 includes the plurality of relevant first embedding representations 136. The method 200 further includes ranking the plurality of relevant first embedding representations 136 based on the respective relevance scores 134. The method 200 further includes outputting the plurality of relevant first embedding representations 136 to at least one of the user interface 138, the storage device 140, and the storage medium 102 for which the respective relevance scores 134 are above the threshold relevance score 146.

In some embodiments, the method 200 further includes introducing the one or more biases 144 into the trained machine learning model 120 based at least in part on aspects of the conversation 108 and aspects of the clinical note 118.

The method 200 further includes training the machine learning model 164 using the training data 150 including the plurality of training conversations 147 and the corresponding plurality of training clinical notes 151. Each training conversation 148 included in the plurality of training conversations 147 is representative of at least a portion of a conversation between the patient 153 and the one or more other individuals 155. Each training conversation 148 is associated with the respective training clinical note 152. The machine learning model 164 includes the first trainable encoder 170, the second trainable encoder 172, and the trainable similarity calculator 174.

The method 200 further includes providing the plurality of training conversations 147 to the first trainable encoder 170. The method 200 further includes generating, by the first trainable encoder 170, the plurality of first training vectors 175. Each first training vector 176 included in the plurality of first training vectors 175 is representative of the respective training conversation 148 included in the plurality of training conversations 147.

The method 200 further includes providing the plurality of training clinical notes 151 to the second trainable encoder 172. The method 200 further includes generating, by the second trainable encoder 172, the plurality of second training vectors 177. Each second training vector 178 included in the plurality of second training vectors 177 is representative of the respective training clinical note 152 included in the plurality of training clinical notes 151.

The method 200 further includes providing the plurality of first training vectors 175 and the plurality of second training vectors 177 to the trainable similarity calculator 174. The method 200 further includes generating, by the trainable similarity calculator 174, the similarity matrix 186 including the plurality of associations 179. Each association 180 included in the plurality of associations 179 is between the respective first training vector 176 included in the plurality of first training vectors 175 and the respective second training vector 178 included in the plurality of second training vectors 177. Each association 180 is one of the positive association 182 and the negative association 184. The positive association 182 is indicative of pairing of the respective training conversation 148 with the respective training clinical note 152 that resulted from the training conversation 148, and the negative association 184 is indicative of pairing of the respective training conversation 148 with the respective training clinical note 152 that resulted from the different training conversation 148.

In some embodiments, for each second training vector 178, the plurality of associations 179 includes at least one positive association 182 and the plurality of negative associations 183.

The method 200 further includes generating, by the trainable similarity calculator 174, the relevancy score 188 corresponding to each association 180 included in the plurality of associations 179.

The method 200 further includes computing the contrastive loss 154 based at least in part on the similarity matrix 186. The method 200 further includes modifying the machine learning model 164 based at least in part on the contrastive loss 154. In some embodiments, modifying the machine learning model 164 includes modifying the one or more weights 168 in the one or more layers 166 of the machine learning model 164.

The method 200 further includes introducing the one or more training biases 158 into the machine learning model 164 based at least in part on aspects of the plurality of training conversations 147 and aspects of the plurality of training clinical notes 151. In some embodiments, the one or more training biases 158 provide domain knowledge that causes the machine learning model 164 to more accurately predict a plurality of relevance scores (e.g., the plurality of relevance scores 133).

The method 200 further includes introducing the one or more other training biases 160 into the machine learning model 164 from the one or more other pre-trained models 156.

The system 100 and the method 200 of the present disclosure allow the trained machine learning model 120 to generate the plurality of relevance scores 133. Each relevance score 134 is indicative of the similarity between the respective first embedding representation 128 (i.e., a portion of the conversation 108) and the respective second embedding representation 130 (i.e., a portion of the clinical note 118). Thus, the system 100 and the method 200 may allow mapping (or evidence identification) between portions of the clinical note 118 and portions of the conversation 108. Further, the system 100 and the method 200 may determine the at least one relevant first embedding representation 135 (i.e., a portion of the conversation 108) for the at least one second embedding representation 130 (i.e., a portion of the clinical note 118) based on the plurality of relevance scores 133. The at least one relevant first embedding representation 135 may be determined based on the respective relevance scores 134 of the plurality of first embedding representations 128 (i.e., portions of the conversation 108). This may allow a user to verify that the portion of the clinical note 118 represents the correct meaning of the corresponding portion of the conversation 108 based on the at least one relevant first embedding representation 135 of the at least one second embedding representation 130. Additionally, the verification may be performed efficiently.

Additionally, the system 100 and the method 200 of the present disclosure may utilize an unsupervised approach for training the machine learning model 164 that mitigates or eliminates an amount of labeled data needed for training the machine learning model 164. Human generated labels may be primarily needed to assess a performance of the unsupervised approach. Most existing works on alignment problem (evidence mapping between doctor patient conversations and associated clinical notes) are either supervised learning-based approaches, which need annotated datasets, or typically are developed for domains other than text-to-text or text-to-audio alignment problems. The system 100 and the method 200 for training the machine learning model 164 according to the present disclosure may not rely on human annotations to learn to extract evidence from doctor patient conversations for each phrase in clinical notes. Similar supervised alignment approaches typically require heavy work on data gathering, sampling, and human annotation, and hence, are difficult to scale. The present approach is agnostic to the way clinical notes are being created from clinical doctor-patient conversations.

In some cases, the machine learning model 164 (i.e., an unsupervised alignment model) may be used to generate synthetic alignment annotations for future training of supervised alignment models. The obtained dataset may later be used for improving a performance of the supervised alignment models. This may avoid or reduce a need to collect human alignment annotations that are costly and/or time-consuming.

It should be appreciated that the innovations disclosed herein are generally adapted to configure computer-based systems to address technical problems related to determining the presence or absence of information, and in particular, the technical problem of determining the presence or absence of information in conversational speech. That is, the innovations described herein are inextricably linked to computing systems that generate structured data from conversations (e.g., audio or transcription-based conversations) and/or provide mappings of structured data to evidence in a conversation.

In particular, when utilizing a machine learning model (or models) as contemplated by the instant disclosure, each concept in a clinical note and/or a patient conversation must be processed based on the number of parameters (or weights) of the model. For instance, the GPT-3 model utilizes a model with more than 100 billion parameters. In other words, using a GPT-3 model (or something similarly sized), each concept must be processed using more than 100 billion discrete calculations. Similarly, when training a machine learning model, the model must be trained in a forward pass of computations, and a backward pass of computations (known as backpropagation), until the model converges after a certain (but generally unknown) number of epochs (or iterations). As a result, even when the machine learning model to be trained according to this disclosure is fractionally the size of a large model (such as the GPT-3 model), training the model for its intended purpose as disclosed herein will nevertheless involve millions, or even billions, of calculations. In short, the sheer magnitude of the parameters and calculations involved for each concept takes the disclosed techniques outside the realm of what is practicable for a human to perform (either in the mind of a human or with the aid of pen and paper) and inextricably links the technology to the realm of computers.

Furthermore, aspects of the present disclosure can provide a technical solution to the technical problem of providing a mapping (or "evidence") from machine-generated clinical notes and a corresponding clinical conversation. For instance, using the unsupervised learning disclosed here, data can be processed that was not previously annotated. This allows the system and techniques of the disclosure to operate on data that may not typically be available for processing using other conventional techniques. Furthermore, the techniques of this disclosure can generalize in ways that conventional techniques, e.g., rule-based approaches, cannot. This allows for techniques of this disclosure to be more accurate than conventional techniques that cannot learn from contextual information to identify relevant information. For instance, when a system cannot learn from contextual information, such as in implementations relying on rule-based approaches that search for the exact matches of words from the clinical note in the conversation, the system may miss or otherwise mischaracterize evidence that might be paraphrased in the clinical note. Unless otherwise indicated, all numbers expressing feature sizes, amounts, and physical properties used in the specification and claims are to be understood as being modified by the term "about". Accordingly, unless indicated to the contrary, the numerical parameters set forth in the foregoing specification and attached claims are approximations that can vary depending upon the desired properties sought to be obtained by those skilled in the art utilizing the teachings disclosed herein.

As used in this specification and the appended claims, the singular forms "a," "an," and "the" encompass embodiments having plural referents, unless the content clearly dictates otherwise. As used in this specification and the appended claims, the term "or" is generally employed in its sense including "and/or" unless the content clearly dictates otherwise.

Spatially related terms, including but not limited to, "proximate," "distal," "lower," "upper," "beneath," "below," "above," and "on top," if used herein, are utilized for ease of description to describe spatial relationships of an element(s) to another. Such spatially related terms encompass different orientations of the device in use or operation in addition to the particular orientations depicted in the figures and described herein. For example, if an object depicted in the figures is turned over or flipped over, portions previously described as below, or beneath other elements would then be above or on top of those other elements.

As used herein, when an element, component, or layer for example is described as forming a "coincident interface" with, or being "on," "connected to," "coupled with," "stacked on" or "in contact with" another element, component, or layer, it can be directly on, directly connected to, directly coupled with, directly stacked on, in direct contact with, or intervening elements, components or layers may be on, connected, coupled or in contact with the particular element, component, or layer, for example. When an element, component, or layer for example is referred to as being "directly on," "directly connected to," "directly coupled with," or "directly in contact with" another element, there are no intervening elements, components or layers for example.

Various examples have been described. These and other examples are within the scope of the following claims.

## Claims

1. A system comprising:
at least one non-transitory computer-readable storage medium having instructions stored thereon; and
at least one computer processor coupled to the at least one non-transitory computer-readable storage medium and configured to execute the instructions to:
receive a conversation involving one or more individuals, wherein the conversation is related to a provision of medical care;
receive a clinical note associated with the conversation;
provide the conversation and the clinical note to a trained machine learning model, wherein the trained machine learning model comprises a first encoder configured to receive the conversation, a second encoder configured to receive the clinical note, and a similarity calculator;
generate, by the first encoder, a plurality of first embedding representations, each first embedding representation included in the plurality of first embedding representations comprising at least a portion of the conversation;
generate, by the second encoder, a plurality of second embedding representations, each second embedding representation included in the plurality of second embedding representations comprising at least a portion of the clinical note;
provide the plurality of first embedding representations and the plurality of second embedding representations to the similarity calculator;
generate, by the similarity calculator, a plurality of relevance scores, wherein each relevance score included in the plurality of relevance scores is indicative of a similarity between a respective first embedding representation included in the plurality of first embedding representations and a respective second embedding representation included in the plurality of second embedding representations;
determine, for at least one second embedding representation, at least one relevant first embedding representation included in the plurality of first embedding representations based on the plurality of relevance scores; and
output the at least one relevant first embedding representation to at least one of a user interface, a storage device, and the at least one non-transitory computer-readable storage medium.

2. The system of claim 1, wherein each second embedding representation comprises at least one of a concept, a phrase, and a sentence included in the clinical note.

3. The system of any of claims 1-2, wherein, for the at least one second embedding representation, the at least one relevant first embedding representation comprises a plurality of relevant first embedding representations, and wherein the at least one computer processor is further configured to:
rank the plurality of relevant first embedding representations based on the respective relevance scores; and
output the plurality of relevant first embedding representations to at least one of the user interface, the storage device, and the at least one non-transitory computer-readable storage medium for which the respective relevance scores are above a threshold relevance score.

4. The system of any of claims 1-3, wherein the at least one computer processor is further configured to introduce one or more biases into the trained machine learning model based at least in part on aspects of the conversation and aspects of the clinical note.

5. The system of any of claims 1-4, wherein the at least one computer processor is further configured to train a machine learning model using a training data comprising a plurality of training conversations and a corresponding plurality of training clinical notes, wherein each training conversation included in the plurality of training conversations is representative of at least a portion of a conversation involving one or more individuals, wherein each training conversation is associated with a respective training clinical note, and wherein the machine learning model comprises a first trainable encoder, a second trainable encoder, and a trainable similarity calculator.

6. The system of any of claims 1-5, wherein the at least one computer processor is further configured to introduce one or more training biases into the machine learning model based at least in part on aspects of the plurality of training conversations and aspects of the plurality of training clinical notes.

7. The system of any of claims 1-6, wherein the one or more training biases provide domain knowledge that causes the machine learning model to more accurately predict a plurality of relevance scores.

8. The system of any of claims 1-7, wherein the at least one computer processor is further configured to introduce one or more other training biases into the machine learning model from one or more other pre-trained models.

9. The system of any of claims 1-8, wherein the at least one computer processor is further configured to:
provide the plurality of training conversations to the first trainable encoder;
generate, by the first trainable encoder, a plurality of first training vectors, wherein each first training vector included in the plurality of first training vectors is representative of a respective training conversation included in the plurality of training conversations;
provide the plurality of training clinical notes to the second trainable encoder;
generate, by the second trainable encoder, a plurality of second training vectors, wherein each second training vector included in the plurality of second training vectors is representative of a respective training clinical note included in the plurality of training clinical notes;
provide the plurality of first training vectors and the plurality of second training vectors to the trainable similarity calculator;
generate, by the trainable similarity calculator, a similarity matrix comprising a plurality of associations, wherein each association included in the plurality of associations is between a respective first training vector included in the plurality of first training vectors and a respective second training vector included in the plurality of second training vectors, wherein each association is one of a positive association and a negative association, wherein the positive association is indicative of pairing of a respective training conversation with a respective training clinical note that resulted from the training conversation, and wherein the negative association is indicative of pairing of a respective training conversation with a respective training clinical note that resulted from a different training conversation;
compute a contrastive loss based at least in part on the similarity matrix; and
modify the machine learning model based at least in part on the contrastive loss.

10. The system of any of claims 1-9, wherein the at least one computer processor is further configured to generate, by the trainable similarity calculator, a relevancy score corresponding to each association included in the plurality of associations.

11. The system of any of claims 1-10, wherein the at least one computer processor is configured to modify the machine learning model by modifying one or more weights in one or more layers of the machine learning model.

12. The system of any of claims 1-11, wherein, for each second training vector, the plurality of associations comprises at least one positive association and a plurality of negative associations.

13. The system of any of claims 1-12, wherein the conversation includes at least one of a dictation, an instruction, and a dialog related to the provision of medical care.

14. A computer-implemented method comprising:
receiving a conversation involving one or more individuals, wherein the conversation is related to a provision of medical care;
receiving a clinical note associated with the conversation;
providing the conversation and the clinical note to a trained machine learning model, wherein the trained machine learning model comprises a first encoder configured to receive the conversation, a second encoder configured to receive the clinical note, and a similarity calculator;
generating, by the first encoder, a plurality of first embedding representations, each first embedding representation included in the plurality of first embedding representations comprising at least a portion of the conversation;
generating, by the second encoder, a plurality of second embedding representations, each second embedding representation included in the plurality of second embedding representations comprising at least a portion of the clinical note;
providing the plurality of first embedding representations and the plurality of second embedding representations to the similarity calculator;
generating, by the similarity calculator, a plurality of relevance scores, wherein each relevance score included in the plurality of relevance scores is indicative of a similarity between a respective first embedding representation included in the plurality of first embedding representations and a respective second embedding representation included in the plurality of second embedding representations;
determining, for at least one second embedding representation, at least one relevant first embedding representation included in the plurality of first embedding representations based on the plurality of relevance scores; and
outputting the at least one relevant first embedding representation to at least one of a user interface, a storage device, and at least one non-transitory computer-readable storage medium.

15. The method of claim 14, wherein each second embedding representation comprises at least one of a concept, a phrase, and a sentence included in the clinical note.
